# EUROPEAN PATENT APPLICATION

(11) **EP 2 224 328 A2**
(43) Date of publication of application: **01.09.2010**
(21) Application number: 10154047.4
(22) Date of filing: 19.02.2010
(51) Int. Cl.: G06F 3/12

(54) **System for visually managing office document finishing options**

(30) Priority: 26.02.2009 US 393371
(71) Applicant: Xerox Corporation, Rochester, New York 14644 (US)
(72) Inventor: Hoppenot, Yves, 38220 Notre Dame De Mesage (FR); Pouyadou, Jerome, 38000 Grenoble (FR)
(74) Representative: Skone James, Robert Edmund

(57) **Abstract**

A computer implemented system and interactive method for selecting finishing options for a print job are disclosed. The method includes receiving (S102) a print job which includes a document to be printed and associated job ticket information. Printers capable of executing the print job are identified (S106) and a user selection of one of the capable printers is received (S110). Finishing options available on the selected printer are displayed (S114) and a user-selected one or more of the displayed finishing options are received (S116). A three-dimensional visualization of the document as it would be rendered on the user-selected printer with a user selected finishing option(s) is generated (S122). The print job ticket information can then be updated, based on any user-selected printer and finishing options.

## Description

The exemplary embodiment relates to a system and method for pre-print job visualization that enables users to view a virtual representation of a printed job which incorporates printer-specific finishing options.

Managing finishing options like stapling, folding, or imposition is not always an easy task for office users. The lack of knowledge about office printer options, in general, and of those actually available on a given printer, and how these options will be applied on the final document can lead users to print one or several drafts prior to obtaining the intended result.

Systems have been developed for document production visualization which provide a virtual rendering of the document being described in job definition format (JDF) or similar standardized input. This virtual rendering has the advantage of being able to "see" and manipulate in 3D, the document before time and materials are committed to the production process. The document can be viewed, as it should appear in a final, finished form, or at any stage of a production process. However, these systems are not tailored for office networks, where different printers have different printing and finishing options.

U.S. Pub. No. 2006/0114490, published June 1, 2006, entitled SYSTEM AND METHOD FOR DOCUMENT PRODUCTION VISUALIZATION, to Rolleston, discloses a system and method for pre-print visualization of a job to be printed. The method includes submitting the content of the printing job, and associated printing environment data, in order to create a virtual rendering of the job in 3D on a user interface. The method and system may be employed to facilitate obtaining user approval for production of the print job before forwarding the job for production.

U.S. Pub. No. 2007/0268513, published November 22, 2007, entitled METHOD AND SYSTEM FOR PRINT PRODUCTION CONFLICT VISUALIZATION, to Enloe, discloses a method for document print production conflict visualization and resolution. A document and a job ticket for printing are selected, with the job ticket including various document publishing requirements. Conflict analysis is performed to identify at least one conflict among the document publishing requirements and a visualization of each identified conflict is sequentially presented on a user interface. The visualizations utilize graphical clues, superimposed upon the rendering of a 3D model of the document, to clearly illustrate the nature of each problem, and sequentially show how each available suggested solution would resolve the conflict. The user interface requests approval to proceed with problem resolution if a conflict is identified among the publishing requirements or indicates that no conflict is present.

U.S. Pat. No. 6,134,568 and U.S. Pat. No. 6,616,702, both to Tonkin, are directed to selecting components for assembly of a document, and previewing a simulation of an assembled document prior to physical assembly.

In accordance with one aspect of the exemplary embodiment, a computer implemented interactive method for selecting finishing options for a print job includes receiving a print job comprising a document to be printed and associated job ticket information, optionally providing for identifying of printers capable of executing the print job, providing for receiving a user selection of one of the capable printers, providing for display of finishing options available on the selected printer, providing for receiving user-selected ones of the finishing options, and generating a three-dimensional visualization of the document as it would be rendered on the user-selected printer with a user selected finishing option. The method further includes providing for updating the print job ticket information based on the user-selected printer and finishing options.

In the method, the job ticket information may include XPS settings and the receiving of the print job may include receiving the XPS settings. The providing for updating the print job ticket information may include updating the XPS settings.

The method may further include providing for identifying of capable printers. The providing for identifying of capable printers may include broadcasting printers and receiving an acknowledgement of printer capability from capable printers. The providing for identifying of capable printers may include providing for user input of printer selection criteria and restricting the broadcasting to printers meeting the selection criteria.

In the method, the providing for the display of finishing options available on the selected printer may include retrieving information from the printer concerning the installed and currently functioning finishing options.

The providing for the display of finishing options available on the selected printer may include displaying a menu of the available finishing options of the selected printer.

The providing for display of finishing options available on the selected printer may include providing for a display of a first set of printing options when a first of the printers is selected and a display of a second set of finishing options, different from the first set, when a second of the printers is selected.

The method may further include displaying, on a user interface, the three-dimensional visualization of the document as it would be rendered on the user-selected printer with the user selected finishing option.

The generating of the three-dimensional visualization of the document may include generating a 3D model based on a user's selected printer and finishing options and mapping texture onto the 3D model for each page of the document. The texture may be based on jpeg files.

The method may further include providing for a user to validate the print job prior to updating the print job ticket information.

The method may further include providing for sending the print job with the updated print job ticket information to a printer for printing.

In the method, the finishing options may be selected from the group consisting of stapling, book binding, hole punching, collating, sorting, mailbox labeling, folding, stacking, stitching, binding, envelope stuffing, postage application, and combinations thereof.

A computer program product may encode instructions, which when executed on a computer causes the computer to perform the method.

A computing device may host a print driver having attached thereto a 3D visualization interface adapted for performing the method and a graphical user interface for displaying the generated three-dimensional visualization.

A printing network may include the computing device and a plurality of printers, each printer providing a set of available printing options, at least one of the printers having a different set of available printing options from a second of the printers.

In another aspect, a pre-print job visualization system includes memory which stores a print driver for receiving a print job comprising a document to be printed and associated job ticket information, a component for identification of printers capable of executing the print job and their finishing options, a visualization interface which receives a user selection of one of the capable printers and a user selected at least one finishing option of the finishing options available on the selected printer and generates a three-dimensional visualization of the document as it would be rendered on the user-selected printer with the user selected at least one finishing option. An update component updates the print job ticket information based on the user-selected printer and at least one finishing option. A processor, in communication with the memory, implements the print driver, visualization interface, printer identifying component and update component.

The system may further include a graphical user interface which displays the three-dimensional visualization of the document and menus for user selection of a printer and the selected printer's finishing options.

In the system, the visualization interface may update the three-dimensional visualization of the document based on user modifications to at least one of the selected printer and selected finishing options.

The visualization interface may be implemented by an XPS filter.

In another aspect, an interactive method for selecting finishing options for a print job includes receiving a print job comprising a document to be printed and associated job ticket information. Printers capable of executing the print job are identified and a list of the capable printers is displayed to a user via a graphical user interface configured for enabling user selection of one of the printers. The method further includes displaying, on the graphical user interface, a list of finishing options available on the user-selected printer, the graphical user interface being configured for enabling user selection of one or more of the displayed finishing options. A three-dimensional visualization of the document as it would be rendered on the user-selected printer with a user-selected finishing option is generated, which enables the user to see how the selected finishing option would affect the printed document. The three-dimensional visualization is modified if the user changes the printer and/or one or more of the user-selected finishing options. When the user validates the print job, the print job ticket information is updated, based on any user-selected printer and finishing options.

Some examples of methods and systems according to the invention will now be described with reference to the accompanying drawings, in which:-

FIGURE 1 is a schematic view of an exemplary environment in which a pre-print job visualization system operates in accordance with one aspect of the exemplary embodiment;

FIGURE 2 illustrates a screen shot of a window displayed on a graphical user interface displaying a 3D representation of a document and menus for section of printers and finishing options when a color document is submitted;

FIGURE 3 illustrates a screen shot of a window displayed on the graphical user interface displaying a 3D representation of a document and menus for section of printers and finishing options when a black and white document is submitted or when a color job is submitted and a black and white printing option is selected;

FIGURE 4 schematically illustrates a pre-print job visualization system implemented in an XPS print path;

FIGURE 5 illustrates an exemplary interactive method for selection of finishing options;

FIGURE 6 illustrates interactions with an XPS filter for visually managing finishing options in the exemplary method of FIGURE 5; and

FIGURE 7 illustrates printer search and peer to peer connections in the exemplary method of FIGURE 5.

The exemplary embodiment provides a system, method, and computer program product therefor which provide for interactive selection of finishing options for a print job which is yet to be rendered by any one of a set of office printers through use of a 3D visualization.

A "print job," as used herein, includes a document to be printed, which may include one or more related sheets or electronic document page images, received from a particular user, or otherwise related, as well as a print job ticket comprising information on how the job is to be printed (e.g., page size, paper type, printer, and finishing requirements). Each page image generally may include information in electronic form which is to be rendered on the print media by the printer and may include text, graphics, pictures, and the like. A "finisher" can be any post-printing accessory device of a printer, such as a collator, sorter, mailbox, inserter, interposer, folder, stapler, stacker, hole puncher, stitcher, binder, envelope stuffer, postage machine, or the like. Each printer may have only a selected subset of possible finishing capabilities provided by selected ones of these finishing devices, this limiting the finishing options which each printer can provide. The operation of applying images to print media, for example, graphics, text, photographs, etc., is generally referred to herein as printing.

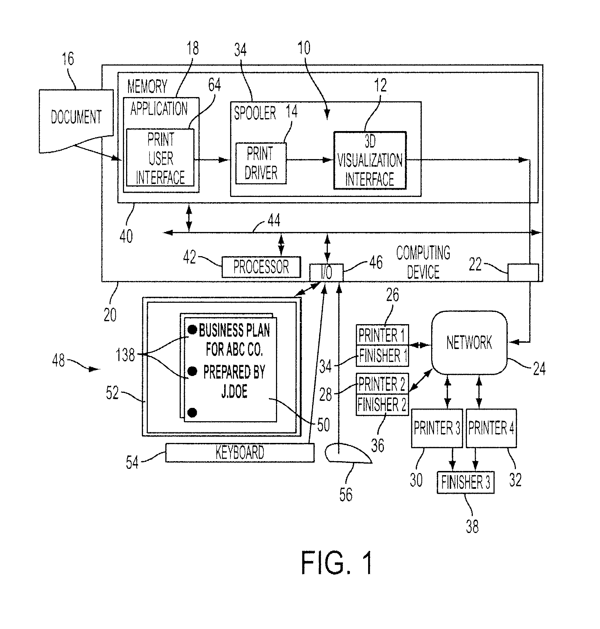

With reference to FIGURE 1, an exemplary computer implemented pre-print job visualization system 10, for generating a 3D virtual representation of a document prior to printing, is shown in an operating environment: an office network printing system. The visualization system 10 includes a pre-print job 3D visualization interface 12, which in the exemplary embodiment, is an add-on component to a print driver 14. Users of the exemplary system 10 create documents 16 for printing using a document processing application 18, such as a word processing program or image processing program. The application 18 may be hosted by the user's computing device 20, e.g., a personal computer, laptop computer or any other computing device hosting or accessing the print driver 14. A network interface 22 of the user's computer 20 provides a wired or wireless link between the print driver 14 and a printing network 24. Network 24 may link several office computing devices including computing device 20, to a plurality of networked printers 26, 28, 30, 32 (here illustrated as printer 1, printer 2, printer 3, and printer 4). Here, "network" is used loosely to encompass all printers that the print job can be directed to for printing. The printers are each associated with finishers 34, 36, 38. Each printer may have its own finisher which provides one or more finishing capabilities (as illustrated for printers 1 and 2), and/or some printers may share the same finisher (as illustrated for printers 3 and 4). Thus, different finishing capabilities may be available to the user on the network. While four printers and three finishers are illustrated, it is to be appreciated that there may be fewer or more printers and finishers, such as 2, 3, 4, 5, or more.

The 3D visualization interface 12 and exemplary print driver 14 may form a part of a spooler 34, which controls the placement of print jobs in a print queue. In some embodiments, where the print driver 14 is not compatible with one or more of the printers 26, 28, 30, 32 the print driver 14 interfaces with one or more additional print drivers, each specific to a particular type of printer, for converting the print-ready document into a format accepted by the specific printer.

As will be appreciated, the components of the system 10, such as driver 14, 3D visualization interface 12, and spooler 34 may be embodied in hardware or software. In the exemplary embodiment, these components are software components stored in memory 40 of computing device 20, and which are implemented by a processor 42, such as the computer's CPU, which is communicatively linked with memory 40, e.g., via a bus 44. The memory 40 may represent any type of computer readable medium such as random access memory (RAM), read only memory (ROM), magnetic disk or tape, optical disk, flash memory, holographic memory, or combination thereof. However, it is to be appreciated that the various components may be hosted by more than one communicatively linked computing device. The computing 20 device is communicatively linked by an input/output device 46 to a graphical user interface (GUI) 48 for displaying an interactive three-dimensional visualization 50, which is a representation of the document as it would be printed, generated by the 3D visualization interface 12.

The exemplary GUI 48 includes a display screen 52, on which the representation is displayed, such as a computer monitor or laptop screen, and one or more user input devices for manipulating the 3D representation 50, here illustrated as a keyboard 54 and cursor control device 56, such as mouse, trackball, or the like, although it is to be appreciated that other input devices, such as a keypad, touch or writable screen, joystick, haptic device, or the like may alternatively or additionally be employed as the user input device.

In the exemplary embodiment, each of the printers 26, 28, 30, 32 has a set of finishing capabilities provided by the printer's finisher, such as stapling, book binding, hole punching, collating, sorting, mailbox labeling, folding, stacking, stitching, binding, envelope stuffing, postage application, and the like. The finishing capabilities of the printers are not identical and can vary over time as finishing components of the printers are added, replaced, removed, modified, or temporarily go offline. Additionally, each printer may vary with respect to a single finishing capability, such as whether there is the capability for stapling documents which have a large number of pages, where the staple can be positioned on the printed document, where the hole-puncher places the holes with respect to the margins of the page, and so forth. Further, some printers may have different rendering capabilities, such as black only (monochrome), multi-color printing (such as cyan, magenta, yellow and black), which is referred to herein simply as color printing, and the like. Printers may be stacked with different grades of print media, such as heavyweight paper, lightweight paper, preprinted paper, transparent sheets, and the like.

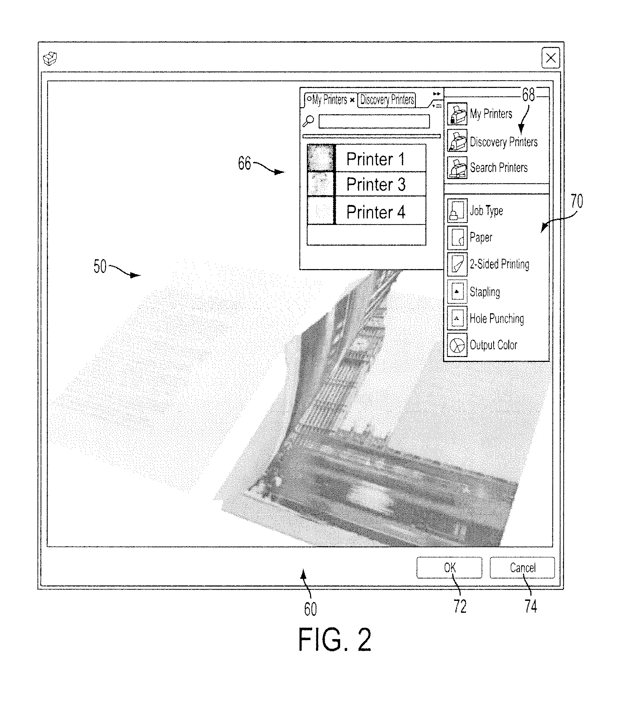

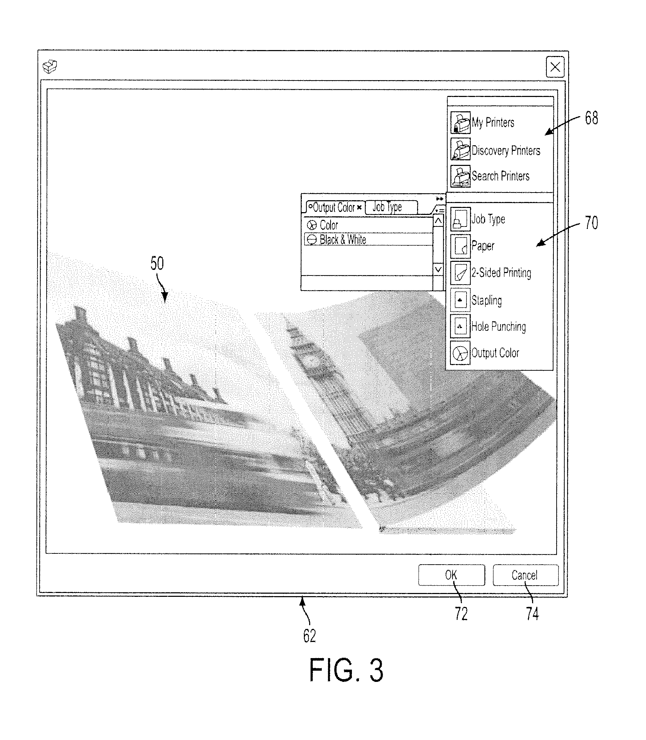

The exemplary pre-print job visualization system 10 extends the capabilities of the print driver 14 by providing a printer-specific what-you-see-is-what-you-get (WYSIWYG) interface 12 which is able to display and interact with a three-dimensional document preview 50 presented to the user on the display screen 52 of the GUI 48. Rendered finishing options are strongly linked to the capabilities of the selected printer. Thus, content of the preview 50, displayed during editing, appears very similar to the final output, generally a printed document, as illustrated in the screen-shots of pop-up windows 60, 62 shown in FIGURES 2 and 3. For example, a color print job is shown in color if color printing capability is available and selected, or in black and white if not; a monochrome job is shown in black and white. Staples, sides, hole-punches, and the like are also represented.

The pre-print job visualization system 10 is capable of identifying the current finishing and rendering capabilities of the network printers 26, 28, 30, 32 etc. In particular, given the user's location, the system 10 is capable of determining whether any of the local network printers are available by broadcasting the network. Additionally, given a selected printer, the system 10 is capable of identifying that printer's capabilities and generating a 3D representation 50 for a document as it would be output by that printer, given the finishing capabilities of that printer.

In operation, an electronic document 16 which is to be printed in the office environment is sent, as normal, from the application 18 to the print driver 14, e.g., when the user clicks on file-print in a print user interface 64. After the original validation of print options specific to the application, a new popup window 60, 62 appears on the user's screen 52. The popup window shows the three-dimensional virtual representation 50 of the printed document. As a virtual object, the user can virtually turn the rendered document in order to see all finishing and rendering options such as duplex or simplex, staples, holes, or N-up imposition which are made available by a given printer's available finishing capabilities. The user can also virtually turn the pages of the document and perform other actions which involve animation. As illustrated in FIGURE 2, the user can interact with these finishing options by selecting an available printer on the network from a list 66 proposed by the system 10 after broadcasting the network to find printers within range (actuated by clicking on a printer search or printer discovery button 68). The system 10 causes a list of the available finishing options on the selected printer to be displayed (as shown at 70), and the user can then select one or more of the available finishing option(s) for the chosen printer (here Printer 1). At each change, the three-dimensional rendering aspects of the document change. The user can validate or cancel the print job at any time, for example, by clicking on the displayed OK or cancel buttons 72, 74. Validating the print job causes the driver 14 to update the print job and send it to the selected printer with the selected finishing options.

Some advantages of the system 10 are the saving in time, printer consumables, and user frustration, by reducing the number of times a document is printed before the user is satisfied. It also helps to educate the user as to the capabilities of the printers in an easily understood visual way. It can also lead to an improvement in the quality of output documents. These advantages are enhanced through showing the user an accurate, printer-specific representation of the final document based on actual printer capabilities, rather than on generic criteria which do not take into account differences between printers.

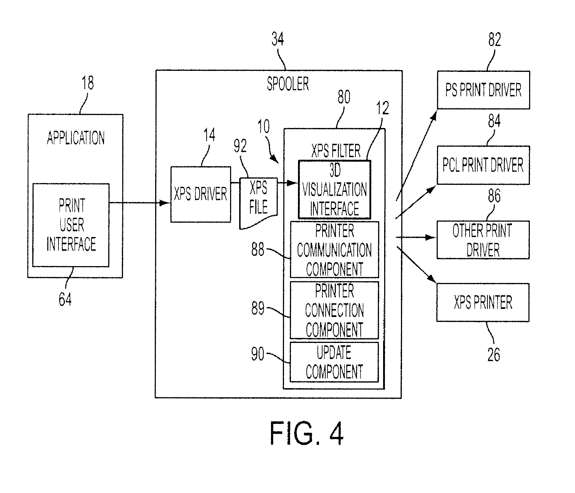

FIGURE 4 illustrates by way of example, an embodiment of the system 10 utilizing an XPS print path. XPS is the XML Paper Specification, which defines an open document format that uses extensible mark-up language XML. It is to be appreciated that other document formats may be used. The XPS print path allows the usage of filters at the spool time. These filters give the opportunity to deal with the rendered version of the document in XPS format and the settings set by the user during the print action. The exemplary 3D visualization interface 12 then functions as one of the filters 80 of the XPS print path, facilitating ease of installation as an add-on component. For further details of XPS filters see, for example, U.S. Patent Application Serial No.: 12/163,219, filed on June 27, 2008, entitled A DYNAMIC XPS FILTER, by Jerome Pouyadou, et al. Each filter in the XPS print path may be binary so that when filter 80 is ON, the system automatically calls up the visualization interface 12. If the filter is switched off, the visualization interface 12 is bypassed.

Some printers (e.g., Printer 1) are directly compatible with the XPS format. For other printers, the XPS file can be easily converted to another page description language, such as PostScript (PS) or PCL, using, for example a universal print driver which is capable of converting the file to an appropriate one of a set of page description languages. Or, as shown in FIGURE 4, a separate print driver 82, 84, 86, etc. may be provided for each printer format.

As illustrated in FIGURE 4, a printer communication component 88 is configured for broadcasting the printers 26, 28, 30, 32, etc. on the network to identify any printers which are capable of rendering the print job. A printer connection component 89 is configured for establishing a connection with a selected printer to identify its current finishing and other capabilities. An update component 90 updates the job ticket to reflect any changes the user has made. As will be appreciated, two or more of components 88, 89, 90 may be combined into a single component. In the exemplary embodiment, components 88, 89, 90 are software components that may form a part of the XPS filter 80, although in other embodiments, they may be add-on components to the 3D visualization interface 12 or print driver 14.

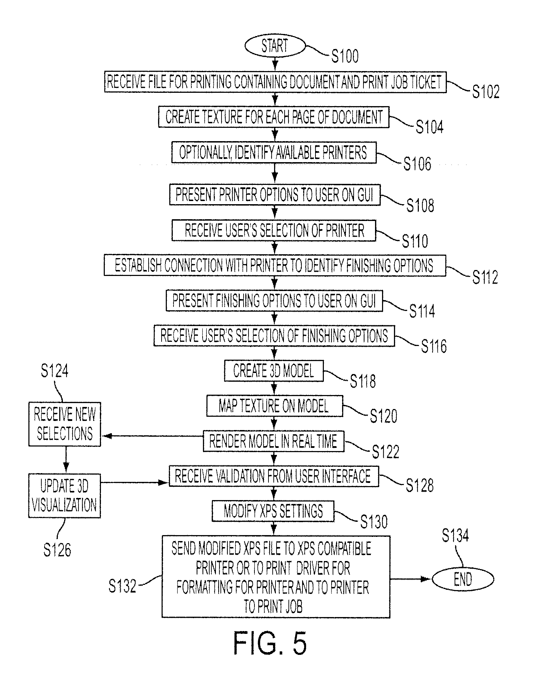

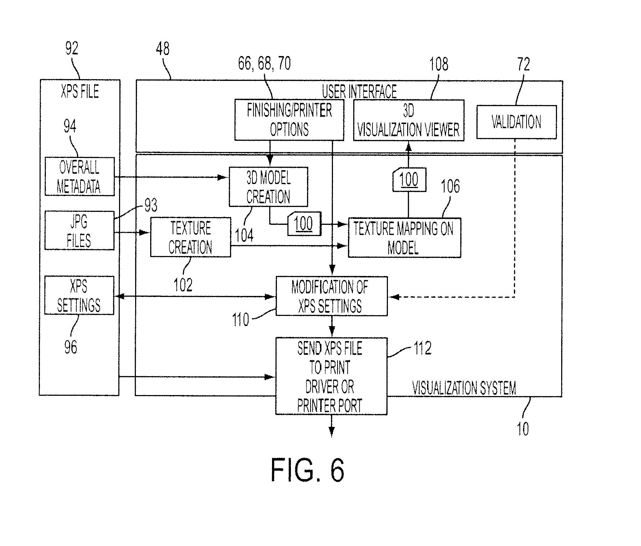

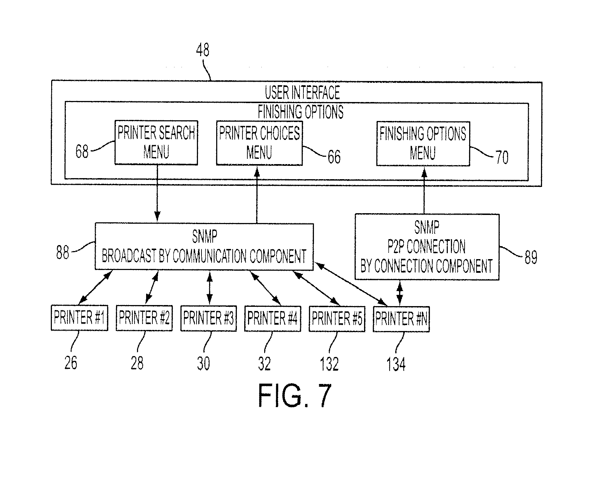

FIGURE 5 illustrates a method for generating a three-dimensional visualization 50 which includes managing finishing and printer options with an XPS filter. The method is best understood with reference to FIGURE 6 where the functional relationships between the system 10, XPS file, and GUI 48 are shown and FIGURE 7, where the selection and connection of a printer is illustrated. The method begins at S100 with the user having selected to print a document.

At S102, an XPS file 92 is created by the XPS print driver 14. The file 92 includes the document 16 to be printed, e.g., as JPG files 93 with associated metadata 94, and a job ticket which includes XPS settings 96. The XPS settings may include default settings, such as provision of a default printer, and default finishing options, such as collating. The XPS settings also include an internal description of how the elements composing the XPS file are assembled together, in terms of location, page number, binding, paper thickness, paper color, layout imposition, and the like.

At S104, texture is created for each page of the document. For a monochrome document, the texture is in black and white, and for a color document, the texture is in color.

At S106, available printers on the network (subject to any location or user's selection criteria) may be identified by the system.

At S108, a list 66 of printer options is presented to the user via the GUI 48, based on the available printers identified.

At S110, the user may select a printer from the printer options listed, and the selection is received by the system 10.

At S112, a connection is established with the printer selected whereby finishing options currently available on that printer are identified.

At S114, the finishing options (as well as rendering options) on the printer are presented to the user, by displaying a list 70 on the GUI 48.

At S116, the user makes a selection of finishing options from the list 70 presented, and the selection is received by the system 10. In other embodiments, this step may take place later, if the user decides to select other printer capabilities, such as pre-print (layout imposition) or rendering options (black vs. color), first, in which case, one or more of the following steps may be repeated one or more times at S124.

At S118, a 3D model 100 is generated based on print job metadata (such as page size, paper type, etc.) and selected finishing options for the selected printer.

At S120, the texture created from the image content (at S104) is mapped onto the 3D model 100.

At S122, the 3D model 100 is rendered in real time as a three-dimensional visualization 50 on the GUI.

At S124, the user may decide to change one of the selections, such as printer and/or finishing options. The system receives the new selection and at S126, updates the model 100 and corresponding three-dimensional visualization 50.

The user may review the representation, repeating the selection process if desired. The user may decide to terminate the print job or, if acceptable, clicks the validate button. The validation notice is received by the system (S128).

At S130, the update component 90 of the system 10 updates the XPS settings 96 on the print job file 92 to reflect the user's final selections.

At S132, the updated XPS file 92 is sent directly to the printer for printing (if the printer is XPS compatible) or to an appropriate printer-compatible print driver 82, 84, 86, if the print job need to be formatted for the printer.

The method ends at S134.

The method illustrated in FIGURE 5 may be implemented in a computer program product that may be executed on a computer. The computer program product may be a tangible computer-readable recording medium on which a control program is recorded, such as a disk, hard drive, or the like. Common forms of tangible computer-readable media include, for example, floppy disks, flexible disks, hard disks, magnetic tape, or any other magnetic storage medium, CD-ROM, DVD, or any other optical medium, a RAM, a PROM, an EPROM, a FLASH-EPROM, or other memory chip or cartridge, or any other medium from which a computer can read and use. In other embodiments, the program may be in the form of a transmittable carrier wave in which the control program is embodied as a data signal transmission media, such as acoustic or light waves, such as those generated during radio wave and infrared data communications, and the like, which is subsequently downloaded into tangible media, such as memory of the exemplary system.

The exemplary method may be implemented on one or more general purpose computers, special purpose computer(s), a programmed microprocessor or microcontroller and peripheral integrated circuit elements, an ASIC or other integrated circuit, a digital signal processor, a hardwired electronic or logic circuit such as a discrete element circuit, a programmable logic device such as a PLD, PLA, FPGA, or PAL, or the like. In general, any device, capable of implementing a finite state machine that is in turn capable of implementing the flowchart shown in FIGURE 5, can be used to implement the method for interactive selection of finishing options.

With reference to FIGURE 6, the interactions between the print file 92, GUI 48, and system 10 during the exemplary method are illustrated. The system 10 receives the document 16 and creates an XPS file 92 therefrom, rendered in XPS format. A texture creation component 102 of the 3D visualization interface 12 analyzes the XPS file 92 in order to build page textures. Page textures are images representing the content of the document pages. Texture management may be based on jpeg format images 93. The visualization interface 12 represents the document as it will be printed, dynamically and in 3D, taking the user's selected finishing options into account. Specifically, a global 3D model 100 is calculated by 3D model creation component 104 using metadata 94 of the original job ticket. Textures are then mapped on it by component 106. The 3D model can be based, for example, on COLLADA™ open source software. This software application is a 3D graphics description format based on XML. The computed 3D model 100 is rendered by a viewer 108, such as one based on Adobe^{™} Flash technology, which offers 3D capabilities and which may be extended with additional 3D libraries, such as PAPERVISION 3D™. Other software, such as dedicated, commercial, or open source software may of course be used. When the model 100 is loaded, the 3D viewer 108 immediately renders it in real time (S108). This real time rendering gives the opportunity to manipulate virtually the representation 50 of the document 1 6, for example to turn pages, rotate the document, zoom in on aspects of interest, and so forth.

The user may view the effects of changing finishing options and/or printers on the 3D representation 50 until a satisfactory combination is found. The user can then validate the 3D representation of the document. The selected options are then used by a modification component 110 to modify the original XPS settings 96 of the XPS print job ticket. The modified XPS file (including document images and modified XPS settings) is then sent by exporting component 112 to the appropriate printer compatible driver 82, 84, 86, which performs the final format conversion (if needed for the printer) and sends the document in the appropriate page description language to the printer. In other embodiments, the document and print ticket can be sent directly to the printer port (bypassing its dedicated driver) if the printer is a native XPS printer and if the system 10 is configured to do so.

With reference now to FIGURE 7, the selection of finishing options/printers may include first, printer selection and second, real time selection of finishing options. For the printer selection, the user may select a desired printer by selection from a drop-down menu, by typing its IP address, or by searching for it dynamically with the help of the simple network management protocol (SNMP) provided by the communication component 88. In the latter case, the component 88 may broadcast a SNMP request to all printer IP addresses in a subnet and wait for a valid printer answer. The component 88 receives an acknowledgement of a printer's availability from any available printer. The component 88, or the print driver 14, a utomatically detects the location of the user's computer based on the local network and updates the current printer list with appropriate printers for that location. In one embodiment, component 88 is able to detect which printers are currently online and available to the user at the time of printing. The component 88 may also do some sorting of the list of printers based on status, location, name, or the like, making it easy to find and choose the printer the user wishes to utilize. In other embodiments, component 88 may be a separate software component or a simple identification component which identifies a printer based on stored information. In one embodiment, the user may direct the search by searching fields like "printer location" in a printer search menu 68, which provides data on each available printer 26, 28, 30, 32, 132, 134. This allows the user to select printer search criteria, such as to a criterion requiring a search for printers in a logical range, or based on other criteria. Communication component 88 focuses the search based on these criteria. A list of available printers is then displayed in the printer choices menu 66.

As soon as a printer is selected, a "peer to peer" connection is made by connection component 89, which again may be based on the SNMP protocol, in order to retrieve information from the printer concerning the installed and currently functioning finishing options. Menu options listing the selected printer's capabilities may then be proposed to the user on menu 70 which are built on these available finishing options.

In the exemplary embodiment, the XPS filter 12 (or printer driver 14) provides the capability to search for a printer and to acquire information on its available finishing options. This allows a user to select a printer in a logical range (i.e., based on functional metadata like printer name or printer location) and not only in a technical range (i.e., based on gateway and subnet mask IP addresses). Using the information on finishing capabilities acquired from the selected printer, a three-dimensional visualization 50 of the future shape of the document can be generated directly based on the available finishing options of the desired printer. A user can interact with the visualization 50 and improve the finished document by selection of appropriate finishing options.

For example, in viewing the three-dimensional visualization 50 shown in FIGURE 1, the user may realize that the hole punching option will cause holes 138 to obscure the text and may select a different finishing option, such as staples, from menu 70, or cancel the print job, by clicking on button 74, and reformat the document 16. Or, the visualization 50 may display the inability of the staples available on the selected printer 134 to staple the finished document, for example because the number of pages and/or thickness of the paper selected may make for a document which is too thick. To resolve the problem, a user may, for example, select a different paper weight, go to duplex mode (double sided) or print two pages as one (N-up), instead of simplex (single sided) printing, choose a different binding method, such as using hole punches, or select a different printer which may have larger staples, with the ability to see each of these changes on the visualization 50. Or, a user may notice that the adhesive used in bookbinding a document may clamp the pages tightly and thus obscure part of the document images. The user may then opt for a different finishing option. With each change, the 3D visualization 50 adapts to the change. Once validated by the user, the update component 90 modifies the job ticket, for example by updating the XPS settings.

The XPS architecture described above is particularly suited to the exemplary method, since it allows interaction with any kind of office printer. However, it is to be appreciated that the system 10 may be adapted to operation in a non-XPS environment.

## Claims

1. A computer implemented interactive method for selecting finishing options for a print job comprising:
receiving a print job comprising a document to be printed and associated job ticket information;
providing for receiving a user selection of one of a plurality of printers;
providing for display of finishing options available on the selected printer, at least a first of the plurality of printers providing different finishing options from a second of the plurality of printers;
providing for receiving user-selected ones of the finishing options;
generating a three-dimensional visualization of the document as it would be rendered on a user-selected printer with a user-selected finishing option; and
providing for updating the print job ticket information based on any user-selected printer and finishing options.

2. The method of claim 1, wherein the job ticket information includes XPS settings and the receiving of the print job includes receiving the XPS settings; and preferably the providing for updating the print job ticket information includes updating the XPS settings.

3. The method of claim 1, further comprising providing for identifying of capable printers; preferably the providing for identifying of capable printers including broadcasting printers and receiving an acknowledgement of printer capability from capable printers; more preferably the providing for identifying of capable printers includes providing for user input of printer selection criteria and restricting the broadcasting to printers meeting the selection criteria.

4. The method of any of the preceding claims, wherein the providing for the display of finishing options available on the selected printer comprises retrieving information from the printer concerning the installed and currently functioning finishing options.

5. The method of any of claims 1 to 3, wherein the providing for the display of finishing options available on the selected printer comprises displaying a menu of the available finishing options of the selected printer.

6. The method of any of claims 1 to 3, wherein the providing for display of finishing options available on the selected printer comprises providing for a display of a first set of printing options when a first of the printers is selected and a display of a second set of finishing options, different from the first set, when a second of the printers is selected.

7. The method of any of the preceding claims, further comprising displaying on a user interface the three-dimensional visualization of the document as it would be rendered on the user-selected printer with the user selected finishing option.

8. The method of any of the preceding claims, wherein the generating a three-dimensional visualization of the document comprises generating a 3D model based on a user's selected printer and finishing options and mapping texture onto the 3D model for each page of the document, the texture preferably being based on jpeg files.

9. The method of any of the preceding claims, further comprising providing for a user to validate the print job prior to updating the print job ticket information.

10. The method of any of the preceding claims, further comprising providing for sending the print job with the updated print job ticket information to a printer for printing.

11. A computer program product encoding instructions, which when executed on a computer causes the computer to perform the method of any of the preceding claims.

12. A computing device which hosts a print driver having attached thereto a 3D visualization interface adapted for performing the method of any of claims 1 to 10, and a graphical user interface for displaying the generated three-dimensional visualization.

13. A printing network comprising the computing device of claim 12 and a plurality of printers, each printer providing a set of available printing options, at least one of the printers having a different set of available printing options from a second of the printers.

14. A pre-print job visualization system comprising:
memory which stores:
a print driver for receiving a print job comprising a document to be printed and associated job ticket information;
a component for identifying of printers capable of executing the print job and their finishing options;
a visualization interface which receives a user selection of one of the capable printers and a user selected at least one finishing option of the finishing options available on the selected printer and generates a three-dimensional visualization of the document as it would be rendered on the user-selected printer with the user selected at least one finishing option; and
an update component for updating the print job ticket information based on the user-selected printer and at least one finishing option; and
a processor in communication with the memory which implements the print driver, visualization interface, printer identifying component and update component.

15. The system of claim 14, further comprising a graphical user interface which displays the three-dimensional visualization of the document and menus for user selection of a printer and the selected printer's finishing options.
